# EUROPÄISCHE PATENTSCHRIFT

(11) **EP 2 992 255 B1**
(45) Veröffentlichungstag und Bekanntmachung des Hinweises auf die Patenterteilung: **29.03.2017**
(21) Anmeldenummer: 14723740.8
(22) Anmeldetag: 24.04.2014
(51) Int. Cl.: F16K 11/074

(54) **ELEKTRISCH ANTREIBBARES VENTIL ZUR REGELUNG VON VOLUMENSTRÖMEN IN EINEM HEIZ- UND/ODER KÜHLSYSTEM EINES KRAFTFAHRZEUGES**
ELECTRICAL ACTUATED VALVE FOR VOLUME FLOW CONTROL IN A HEATING OR COOLING SYSTEM OF A VEHICLE
SOUPAPE À ENTRAÎNEMENT ÉLECTRIQUE POUR RÉGULATION DE DÉBIT VOLUMIQUE DANS UN SYSTÈME DE CHAUFFAGE OU DE REFROIDISSEMENT POUR UN VÉHICULE AUTOMOBILE

(30) Priorität: 03.05.2013 DE 102013208192
(43) Veröffentlichungstag der Anmeldung: 09.03.2016
(73) Patentinhaber: Mahle International GmbH, 70376 Stuttgart (DE)
(72) Erfinder: KLEIN, Hans-Peter, 71397 Leutenbach (DE); STEURER, Hans-Ulrich, 70376 Stuttgart (DE)
(74) Vertreter: Grauel, Andreas
(86) Internationale Anmeldenummer: PCT/EP2014/058383
(87) Internationale Veröffentlichungsnummer: WO 2014/177456

(56) Entgegenhaltungen:
- WO-A1-03/036145
- WO-A1-2011/086154
- DE-A1- 4 324 749
- DE-A1- 19 932 313

## Beschreibung

### Technisches Gebiet

Die Erfindung betrifft ein elektrisch antreibbares Ventil zur Regelung von Volumenströmen in einem Heiz- und/oder Kühlsystem eines Kraftfahrzeuges nach dem Oberbegriff von Anspruch 1.

### Stand der Technik

In Kühlsysteme von Kraftfahrzeugen wird heute ein Thermomanagement zur Verbrauchsreduktion, zur Verringerung der CO₂-Emissionen und zur Komforterhöhung durchgeführt. Je nach thermischen Anforderungen wird dabei Kühlmittelstillstand im Warmlauf realisiert, die Kühlmitteltemperatur der Verbrennungskraftmaschine je nach Lastbedingungen geregelt sowie ein oder mehrere Nebenkreise wie Getriebeöl-, Motoröl- oder Heizkreis geregelt oder geschaltet. Kühlsysteme des Kraftfahrzeuges bestehen dabei aus einem Verbrennungsmotor, einem Kühlkörper, einer Pumpe und einem Regelventil.

Aus der US 5,950, 576 A ist ein elektrisch von einem Gleichstrommotor angetriebenes Ventil bekannt, welches einen scheibenförmigen Ventilkörper aufweist. Dabei wird das Kühlmittel von einer Seite in das Innere des Ventils und durch den Ventilkörper geführt, um 180° umgelenkt und wieder durch den Ventilkörper geführt und auf der gleichen Seite des Ventils herausgeleitet. Durch die Umlenkung entstehen dabei hohe Druckverluste. Besonders nachteilig dabei ist, dass der Ventilkörper bei dieser Ausgestaltung für zwei Einlasskanäle und einen Auslasskanal drei Öffnungen enthält, was einen hohen Dichtungsaufwand nach sich zieht.

Ebenfalls ein Ventil mit scheibenförmigem Ventilkörper ist in der DIE 10 2006 053 310 A1 offenbart. Das Ventil weist ein Gehäuse mit mindestens einem Einlasskanal und mindestens einem Auslasskanal auf, wobei der scheibenförmige Ventilkörper um die Achse einer Welle drehbar gelagert ist. Darüber hinaus weist der Ventilkörper eine drehwinkefablängige Öffnungscharakteristik zum Regeln der Volumenströme auf, wobei mehrere diskrete Öffnungen zur Verbindung eines einzelnen Einlasskanals mit dem einen Auslasskanal vorgesehen sind. Dies führt beim Verstellen des Ventilkörpers dazu, dass die Ränder der mehreren Öffnungen ständig über Dichtungen gleiten und somit ein starker Verschleiß an der Dichtung hervorgerufen wird. Die An- und Abströmung des Kühlmittels erfolgt axial zur Drehachse in entgegengesetzter Richtung.

Nachteilig für die elektrisch angetriebenen Ventile ist, dass umfangreiches Dichtungsmaterial zur Abdichtung der Vielzahl der Öffnungen notwendig ist, wodurch das Ventil konstruktiv aufwändig und sehr kostenintensiv ist. Gleichzeitig verkürzt eine starke Abnutzung der Dichtungen die Lebensdauer des Ventils.

Andere Ventile zur Regelung von Volumenströmen in Heiz- oder Kühlsystemen der Kraftfahrzeuge, sind aus WO03/036145, DE4324749, WO2011/086154 oder DE19932313 bekannt.

### Darstellung der Erfindung, Aufgabe, Lösung, Vorteile

Es ist die Aufgabe der Erfindung, ein elektrisch antreibbares Ventil zu schaffen, welches konstruktiv einfach gestaltet ist und eine lange Lebensdauer aufweist.

Dies wird erreicht mit den Merkmalen von Anspruch 1, wonach die nur eine Regelkontur des Ventilkörpers einen Kurzschlusskreislauf und einen Kühlerkreislauf des Heiz- und/oder Kühlsystems regelt und der Ventilkörper ist auf seiner Oberfläche mit einer Dichtung zur Abdichtung gegenüber dem Gehäuse versehen, oder zur Abdichtung des Ventilkörpers gegenüber dem Gehäuse ist eine Dichtung im Gehäuse angeordnet. Dies hat den Vorteil, dass durch Verwendung nur einer Regelkontur des Ventilkörpers sich der Dichtungsaufwand reduziert. Gleichzeitig wird der Dichtungsverschleiß gesenkt, wodurch sich die Lebensdauer des Ventils erhöht. Die nur eine Regelkontur bildet dabei nur einen Durchlass für das Kühlmittel am Ventilkörper. Ein solches Ventil kann sowohl als Eintrittsregler als auch als Austrittsregler für das Kühlmittel eines Verbrennungsmotors genutzt werden.

Vorteilhafterweise ist die Regelkontur als Öffnung des vollkreisförmigen Ventilkörpers ausgebildet. Bei scheibenförmigen Ventilkörpern verringert sich der konstruktive Aufwand bei der Herstellung des Ventils, was die Kosten reduziert.

Alternativ ist die Regelkontur von einer Außenform eines kreissegmentähnlichen, vollflächig ausgebildeten Ventilkörpers gebildet. Dabei wird durch die nicht vollkreisförmige Außenform des scheibenförmigen Ventilkörpers ein Durchlass für den Volumenstrom geschaffen, welcher je nach Stellung des Ventilkörpers eine entsprechende Regelung zulässt.

In einer weiteren Alternative ist die Regelkontur als Kulisse an einer Mantelfläche des Ventilkörpers ausgebildet. Eine solche Kulisse, welche sich annähernd parallel zum Gehäuse ausdehnt, hat dabei vorteilhafterweise die Funktion, einen zusätzlichen Kühlmittelkreislauf zu regeln. Durch diese einfach herstellbare Kulisse kann beispielsweise während des Warmlaufens bei noch geschlossenem Kurzschluss- und Kühlerkreislauf ein Heizkreislauf bereits freigegeben werden, um z.B. im Winterbetrieb einen entsprechenden Komfort im Fahrgastraum zu erhöhen.

In einer Variante ist der Ventilkörper schwenkbar gegen die Achse ausgebildet. Neben der Drehung des Ventilkörpers um die Achse stellt das Schwenken des Ventilkörpers gegenüber der Drehachse einen zusätzlichen Freiheitsgrad bei der Bewegung des scheibenähnlichen Ventilkörpers dar. Dies ermöglicht dem als Elektromotor ausgebildeten Antrieb des Ventilkörpers mit geringerer Kraft zu arbeiten. Der auf der Achse drehbar gelagerte Ventilkörper wird dabei einfach je nach Vorgaben eines Steuergerätes seinen Drehwinkel schwankend verändern.

In einer Ausgestaltung besteht der Ventilkörper aus Metall oder aus einem kühlmittelbeständigem Kunststoff, wobei der Kunststoff vorzugsweise Glasfasern und/oder gleitoptimierende Zusätze enthält. Die Zusätze machen einen Anteil zwischen 10% und 70% aus. Die Verwendung gleitoptimierender Zusätze ermöglicht ein einfaches Bewegen des Ventilkörpers bei reduzierter Reibung.

In einer Variante ist der Ventilkörper auf seiner Oberfläche mit einer Dichtung zur Abdichtung gegenüber dem Gehäuse versehen. Mittels einer solchen Dichtung wird sichergestellt, dass der zu regelnde Volumenstrom nur durch die Regelkontur selbst beeinflusst wird und keine Leckage an dem Ventilkörper auftritt.

Alternativ ist zur Abdichtung des Ventilkörpers die Dichtung im Gehäuse angeordnet. Die Dichtungen können dabei insbesondere als Formdichtungen ausgebildet sein und einen Formschluss zur ausreichenden Abdichtung ausbilden.

In einer Weiterbildung steht der auf einer Welle angeordnete Ventilkörper gemeinsam mit der Welle oder nur der Ventilkörper mittels mindestens eines federnden Elementes unter Vorspannung zu einer Öffnung mindestens eines Anschlussstutzens. Durch diese Vorspannung ist es möglich, dass der Ventilkörper eine Nachstellbewegung bei sich verschleißender Dichtung ausführt, um eine über die Lebensdauer des Ventils vorgeschriebene Leckage nicht zu überschreiten.

In einer Variante ist in dem Gehäuse ein Dehnstoffthermostat als Ausfallsicherung des Ventils angeordnet. Das Dehnstoff-Thermostat gewährleistet bei Erreichung einer kritischen Temperatur des Kühlmittels eine ausreichende Kühlung des Verbrennungsmotors, wodurch thermische Schäden an dem Heiz- und/oder Kühlsystem unterbunden werden. Die Position des Dehnstoff-Thermostaten im Gehäuse ist beim Einsatz des Ventils als Eintritts- oder als Austrittsregler gleich.

Nach einer vorteilhaften Ausführungsform weist das Gehäuse Anschlüsse für Schläuche eines separaten Dehnstoff-Thermostats auf. Somit kann das Thermostat auch außerhalb des Ventils angeordnet sein, wodurch es bei Bedarf leichter austauschbar ist.

Gemäß einer vorteilhaften Ausführungsform ist eine Gehäusewand des Aktuators, durch den das Ventil elektrisch antreibbar ist, zugleich eine Wand des Gehäuses des Ventils. Dadurch lässt sich Bauraum einsparen.

Nach einer weiteren vorteilhaften Ausführungsform erfolgt eine Positionsrückstellung des Ventilkörpers über einen Hall-Sensor oder einen Hall-Schalter.

Nach einer anderen vorteilhaften Ausführungsform sind die Referenzpunkte des Hall-Schalters über einen oder mehrere mechanisch ausgebildete Endpositionen oder über Magnete ausgebildet.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: einen Kühlkreislauf mit dem erfindungsgemäßen Ventil als Eintrittsregier,
- Fig. 2: einen Kühlkreislauf mit dem erfindungsgemäßen Ventil als Austrittsregler,
- Fig. 3: ein Ausführungsbeispiel des erfindungsgemäßen Ventils
- Fig. 4: zwei Ausführungsbeispiele des Ventilkörpers,
- Fig. 5: weitere Ausführungsbeispiele des Ventilkörpers,
- Fig. 6: Einsatz eines Dehnstoff-Thermostats in dem Ventil.

### Bevorzugte Ausführung der Erfindung

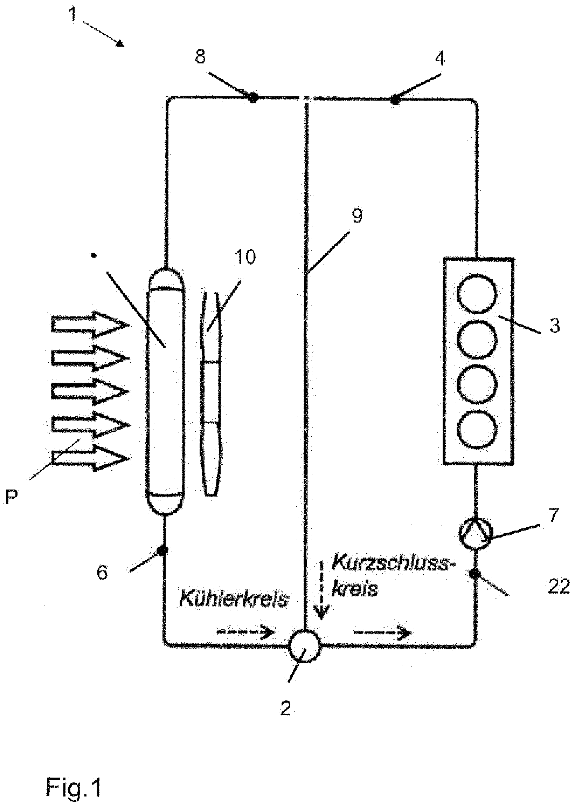

Die Fig. 1 zeigt einen Kühlkreislauf 1 eines Kraftfahrzeuges mit dem erfindungsgemäßen Ventil 2 als Eintrittsregler. Der Kühlkreislauf 1 weist dabei einen Verbrennungsmotor 3 auf, dessen Motoraustritt 4 mit einem Kühlkörper 5 verbunden ist. Der Kühlerrücklauf 6 ist mit dem Ventil 2 verbunden. Der Ausgang des Ventils 2 führt an die Saugseite 22 einer Pumpe 7, welche wiederum mit einem Verbrennungsmotor 3 verbunden ist. Zwischen dem Motoraustritt 4 und dem Kühlervorlauf 8 ist ein Bypass bzw. eine Kurzschlussleitung 9 vorgesehen, welche den Motoraustritt 4 direkt mit dem Ventil 2 und somit wieder mit der Pumpe 7 und dem Verbrennungsmotor 3 verbindet. Der Kühlkörper 5 wird mit Luft (Pfeil P) gekühlt. Hinter dem Kühlkörper 5 befindet sich ein Lüfter 10.

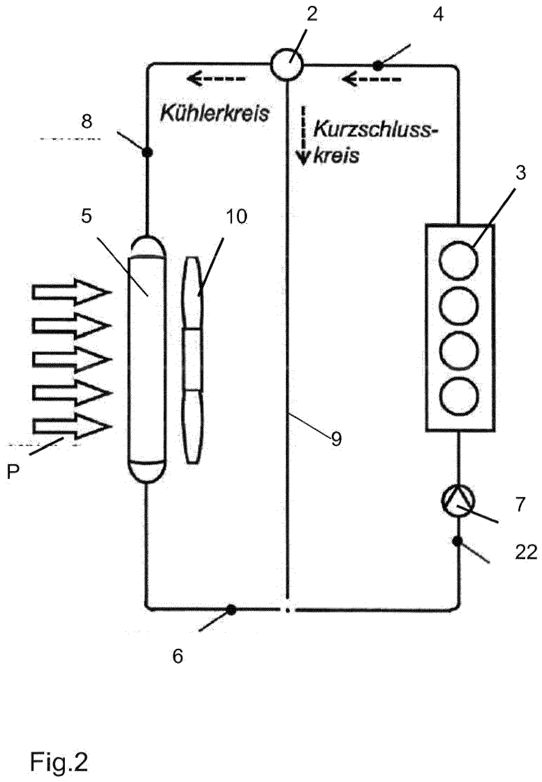

Fig. 2 unterscheidet sich von Fig. 1 lediglich dahingehend, dass das Ventil 2 als Austrittsregler arbeitet und somit zwischen dem Motoraustritt 4 und dem Kühlervorlauf 8 geschaltet ist. Gleichzeitig regelt das Ventil 2 den Kurzschlusskreis 9, welcher den Motoraustritt 4 mit der Saugseite 22 der Pumpe 7 verbindet.

Bei dem als Eintrittsregler ausgebildeten Ventil 2 geht vereinfacht gesagt der Ventilausgang auf die Saugseite 22 der Pumpe 7, der Kurzschlusskreis 9 und der Kühlerrücklauf 6 bilden die Ventileingänge. Bei einem als Austrittsregler eingesetzten Ventil 2 bildet der Motoraustritt 4 den Ventileingang, während der Kurzschlusskreis 9 und der Kühlervorlauf 8 die beiden Ventilausgänge bilden.

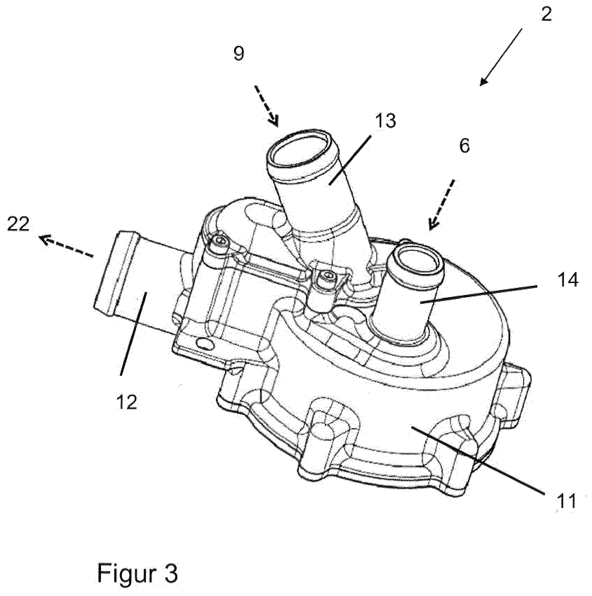

In Fig. 3 ist das als Eintrittsregler arbeitende Ventil 2 dargestellt. Das Ventil 2 umfasst dabei ein Gehäuse 11, welches drei Anschlussstutzen 12, 13, 14 aufweist. Der Anschlussstutzen 12 verbindet dabei das Ventil 2 mit der Pumpe 7 und stellt somit einen Austrittskanal dar. Der zweite Anschlussstutzen 13 verbindet das Ventil 2 mit dem Kurzschlusskreis 9, während der dritte Anschlussstutzen 14 das Ventil 2 mit dem Kühlerrücklauf 6 verbindet. Die Anschlussstutzen 13 und 14 stellen dabei also Eingangskanäle dar.

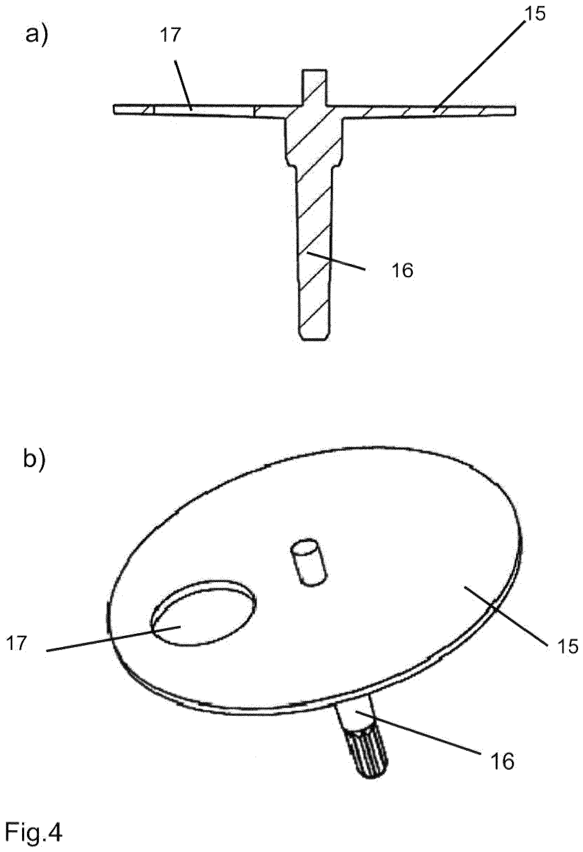

Der Ventilkörper 15 ist, wie in Fig. 4a und b dargestellt, als vollkreisförmiger, scheibenförmiger Körper ausgebildet, welcher eine dezentrale Öffnung 17 als Regelkontur besitzt. Eine Regelkontur bildet dabei einen einzigen Durchlass für das Kühlmittel innerhalb des Eintritts- oder Austrittsreglers 2, 3. Mittels dieser einen flachen Scheibe und der einen Öffnung 17 kann, je nachdem ob das Ventil 2 als Eintrittsregler oder als Austrittsregler eingesetzt wird, der Kurzschluss- und der Kühlerkreislauf geregelt werden. Sollte es notwendig sein, dass mehrere Kühlmittelkreisläufe zu regeln sind, so müssen entsprechend der Anzahl der weiteren Kühlmittelkreisläufe noch weitere Öffnungen auf dem scheibenförmigen Ventilträger 15 ausgebildet werden.

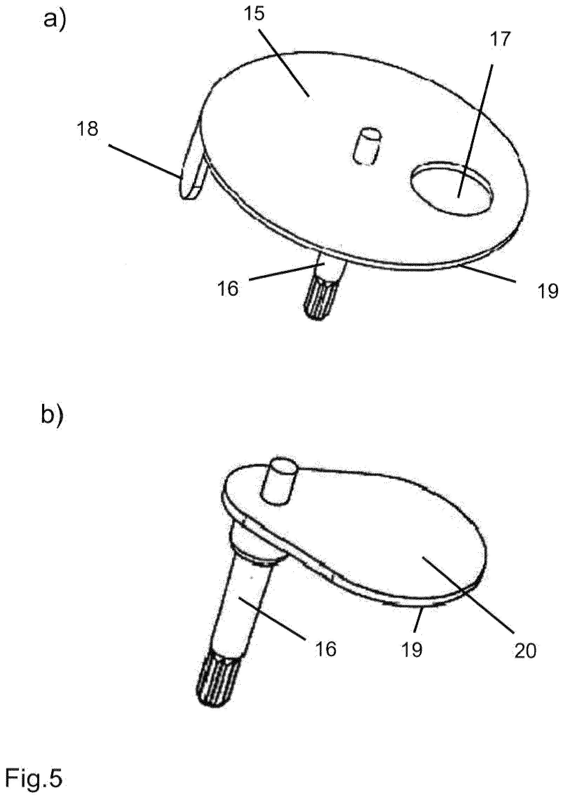

Wie aus Fig. 5 ersichtlich, ist es nicht zwingend notwendig, dass als Regelkontur zur Regelung des Volumenstroms des Kühlmittels zwingend eine Öffnung in dem Ventilkörper 15 ausgebildet sein muss. Alternativ zeigt Fig. 5a eine Regelkontur, welche als Kulisse 18 an der Mantelseite 19 des Ventilkörpers 15 ausgebildet ist. Mittels dieser Kulisse 18 kann ein zusätzlicher Kühlmittelkreis geregelt werden. So kann hierdurch beispielsweise während des Warmlaufens des Verbrennungsmotors 3 bei noch geschlossenem Kurzschluss- und Kühlerkreislauf ein Heizungskreislauf freigegeben werden, um z.B. im Winterbetrieb den Fahrgastkomfort zu erhöhen. Die Kulisse 18 ermöglicht aber auch eine ungeregelte Zu-/Abströmung von zusätzlichen Kühlmittelkreisen in das Ventil 2.

Fig. 5b zeigt einen kreissegmentähnlich ausgebildeten Ventilkörper 20. Mittels dieses kreissegmentähnlichen Ventilkörpers 20 wird lediglich der gewünschte Kanal verschlossen, während die Öffnung 17 der Ausgestaltung des Ventilkörpers 15 nach Fig. 5a den gewünschten Eintritts- oder Austrittsstutzen 12, 13, 14 freigibt. In beiden Fällen verläuft die durch das Ventil 2 tretende Strömung annähernd parallel zur Drehachse des Ventilkörpers 15, 20 und dabei immer in eine Richtung.

Der Ventilkörper 15 bzw. 20 ist aus einem Metall oder aus einem spritzfähigen Kunststoff ausgeführt. Im Falle der Ausführung aus Kunststoff enthält dieser bevorzugt Glasfasern mit einem Anteil zwischen 10% und 70 % und ist beständig gegenüber dem Kühlmittel. Außerdem können in dem Kunststoff gleitoptimierende Zusätze wie PTFE (Polytetrafluorethylen) verwendet werden. Diese gleitoptimierenden Zusätze reduzieren die Reibung des Ventilkörpers 15, 20 am Gehäuse 11. Der Ventilkörper 15, 20 soll dabei an einer Außenfläche eine Ebenheit von kleiner +/- 0,5 mm aufweisen.

Zusätzlich bestehen die Möglichkeiten, dass der scheibenförmige Ventilkörper 15, 20 eine oder mehrere Aussparungen aufweist oder dass er an seiner Außenfläche und/oder Mantelfläche 19 mit einem dichtenden Material beschichtet ist. Der Ventilkörper 15, 20 kann an seiner Oberfläche Erhebungen oder den Ventilkörper 15, 20 nicht durchdringende Aussparungen aufweisen.

Bei dem Ventilkörper 15, 20 und der Welle 16 kann es sich um ein Bauteil aus Kunststoff handeln. Alternativ kann der Ventilkörper 15, 20 aber auch auf eine aus zum Beispiel Stahl bestehende Welle 16 aufgespritzt sein. Alternativ kann die Welle 16 zumindest teilweise durchgehend ausgebildet sein, auf welcher der Ventilkörper 15, 20 drehbar und zur Achse der Welle 16 schwenkbar gelagert ist. Alternativ kann der scheibenförmige Ventilkörper 15, 20 auf dieser Welle 16 axial verschiebbar aufgebracht werden.

An einem oder an beiden Enden der Welle 16 des Ventilkörpers 15, 20 können eine Außenkontur oder eine Innenkontur ausgebildet sein, die eine formschlüssige Verbindung zu einem nicht weiter dargestellten elektrischen Antrieb darstellen.

Der Ventilkörper 15 bzw. 20 kann im Weiteren als Ganzes, d.h. zusammen mit der Welle 16 oder nur auf der Welle 16 selbst, wenn der Ventilkörper 15 und die Welle 16 getrennt ausgebildet sind, mittels mechanischer, vorzugsweise federnder Elemente unter Vorspannung gegen eine oder mehrere der Öffnungen der Anschlussstutzen 13, 14 stehen. Durch diese Vorspannung wird eine Nachstellbewegung durch den Ventilkörper 15 bzw. 20 bei sich verschließender Dichtung ausgeführt und somit eine vorgeschriebene Leckage über der Lebensdauer des Ventils 2 nicht überschritten. Vorteilhafterweise ist das mechanische, insbesondere federnde Element so ausgelegt, dass bei vollständig geschlossenem Ventil 2 (z.B. stehendes Kühlmittel im Warmlauf) und gleichzeitig hoher Drehzahl der Pumpe 7 und somit hohem anliegendem hydraulischen Differenzdruck der Ventilkörper 15 bzw. 20 von der nicht weiter dargestellten Dichtung weggedrückt wird und somit Kühlmittel strömen kann. Dies ist insbesondere immer dann hilfreich, wenn beim Kaltstart der Fahrer des Kraftfahrzeuges sofort eine hohe Drehzahl einstellt, wodurch es zu kritischen Temperaturen bzw. lokalen Temperaturspitzen im Verbrennungsmotor kommen kann bzw. auf der Saugseite der Pumpe 7 Kavitation entstehen kann.

Die Abdichtung zum Ventilkörper 15, 20 kann auch durch in das Gehäuse 11 eingebrachte Dichtungen erfolgen. Diese können dabei eingespritzt oder mechanisch eingefügt sein. Bei den Dichtungen handelt es sich um Elastomere, vorzugsweise EPDM (Ethylen-Propylen-Dien-Kautschuk) oder HNBR (hydrierter Acrylnitrilbutadien-Kautschuk). Diese werden vorteilhafterweise mit einem, die Reibung reduzierenden Werkstoff wie PTFE oder Parylene beschichtet bzw. diese sind in den äußeren Schichten des Elastomers enthalten. Elastomere können aber auch dazu verwendet werden, um ein reibungsoptimiertes Dichtmaterial, z.B. PTFE, elastisch gegen den Ventilkörper 15, 20 zu drücken.

Bevorzugt kann aber auch eine Kombination aus der Einstellung der Federvorspannung und einer nachstellenden Dichtung verwendet werden.

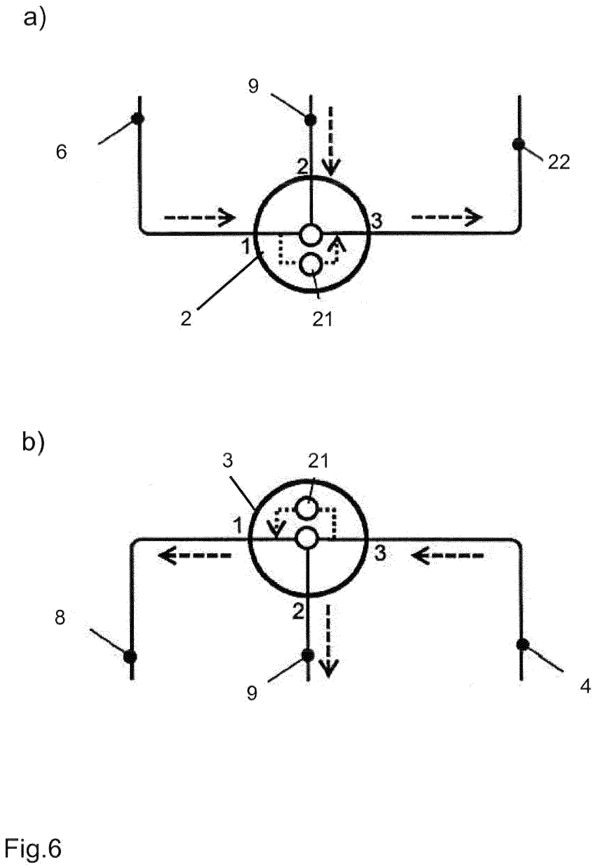

Um die Betriebssicherheit des Kühlkreislaufes 1 bei Ausfall des Ventils 2 zu gewährleisten, wird in das Ventil 2 ein Dehnstoff-Thermostat 21 eingesetzt, wie es in Fig. 6 dargestellt ist. Das Dehnstoff-Thermostat arbeitet dabei als Fail-Safe-Mechanismus. Solche Dehnstoff-Thermostate 21 gewährleisten, dass bei Erreichung einer kritischen Temperatur bei gleichzeitigem Versagen des normalen Betriebes des Ventils eine ausreichende Kühlung des Verbrennungsmotors eingestellt wird. Ein solches Dehnstoff-Thermostat 21 ist direkt von seiner Temperatur und somit von der Kühlmitteltemperatur und der Strömungsgeschwindigkeit des Kühlmittels um den Thermostaten herum abhängig. Bei Erreichung einer kritischen Temperatur schmilzt der Dehnstoff, wodurch durch seine Volumenausdehnung beim Schmelzen das Ventil 2 betätigt wird. Die Position des Dehnstoff-Thermostaten 21 im Gehäuse 11 ist dabei unabhängig davon, ob das Ventil als Eintrittsregler 2 oder als Austrittsregler 3 eingesetzt wird. Beim Einsetzen als Eintrittsregler verbindet das Dehnstoff-Thermostat 21 den Kühlerrücklauf-Eingang mit der Pumpe 7 bzw. dem Motorausgang 4 (Fig. 6a). Beim Einsatz als Austrittsregler verbindet das Thermostat 21 den Motorausfass 4 mit dem Kühlerrrarlauf 8 des Ventils 2 (Fig. 6b).

Wie bereits erläutert, erfolgt der Antrieb des Ventilkörpers 15 bzw. 20 über einen Elektromotor, der in einer Aktuator-Einheit gemeinsam mit einem Getriebe und einem Sensor zur Rückmeldung der Position des Ventilkörpers 15, 20 angeordnet ist. Der Elektromotor ist dabei vorteilhafterweise ein DC-Motor. Bevorzugt ist diese Aktuator-Einheit als eigenständiges Bauteil an das Ventil 2 angebracht. Besonders vorteilhaft ist dabei, wenn eine Gehäuseaußenwand der Aktuatoreinheit gleichzeitig eine Innenseite des Gehäuses 11 des Ventils 2 bildet. Somit kann zum einen der Materialaufwand für das Ventilgehäuse reduziert werden, zum anderen kann aber auch die Bauteilanzahl des Ventils 2 reduziert werden, indem z.B. Welienlager und Wellenabdichtung bis zum Aktuator hin nicht im Gehäuse 11 des Ventils 2 eingebracht werden müssen, da diese üblicherweise in der Aktuatoreinheit bereits vorhanden sind.

Die Rückmeldung der Position des Ventilkörpers 15, 20 erfolgt über einen Hall-Sensor. Als kostengünstige Alternative kann auch ein Hall-Schalter, der eine Relativmessung der Position des Ventilkörpers 15, 20 zu einem oder mehreren Endpositionen, bevorzugt aber durch Magnete dargestellte Referenzpunkte, misst, verwendet werden.

Das beschriebene Ventil 2, welches aufgrund seines einfachen Aufbaus sowohl als Eintrittsregler als auch als Austrittsregler in einem Kühlkreislauf verwendet werden kann, kann dabei so ausgelegt sein, dass nur die beiden Schaltzustände offen und geschlossen realisiert werden. Bevorzugt ist aber auch jeder beliebige Zwischenzustand, insbesondere stufenlos, realisierbar. Bei dem Ventil 2 handelt es sich also um ein Regelorgan, das abhängig von der gewünschten Betriebstemperatur einer oder mehrerer Bauteile die Temperatur des Kühlmittels durch Regelung des Volumenstromes des Kühlmittels einstellt, wobei der Volumenstrom über einen oder mehrere wärmere Kreise (z.B. Kurzschlusskreis) und/oder über einen oder mehrere kältere Kreise (z.B. Kühlerkreis) fließen kann.

In dem Gehäuse des Ventils 2 kann ein Temperatursensor angeordnet sein. Ferner ist es möglich, das Ventil zusammen mit einer Kühlmittelpumpe in einem gemeinsamen Gehäuse anzuordnen.

## Patentansprüche

1. Elektrisch antreibbares Ventil zur Regelung von Volumenströmen in einem Heiz- und/oder Kühlsystem eines Kraftfahrzeuges, mit einem Gehäuse (11), von welchem mindestens zwei Kanäle, vorzugsweise ein Einlasskanal und ein Auslasskanal, abzweigen, wobei in dem Gehäuse (11) ein, um eine Achse einer Antriebswelle (16) drehbarer, scheibenförmiger und eine einzige Regelkontur (17) aufweisender Ventilkörper (15, 20) angeordnet ist, wobei die Regelkontur (17, 18) des Ventilkörpers (15, 20) einen Kurzschlusskreislauf und einen Kühlerkreislauf des Heiz- und/oder Kühlsystems regelt, **dadurch gekennzeichnet, dass** der Ventilkörper (15, 20) auf seiner Oberfläche mit einer Dichtung zur Abdichtung gegenüber dem Gehäuse (11) versehen ist oder dass zur Abdichtung des Ventilkörpers (15, 20) gegenüber dem Gehäuse eine Dichtung im Gehäuse (11) angeordnet ist.

2. Ventil nach Anspruch 1, **dadurch gekennzeichnet, dass** der Ventilkörper (15) als vollkreisförmiger Körper ausgebildet ist, und dass die Regelkontur als Öffnung (17) des vollkreisförmigen Ventilkörpers (15) ausgebildet ist.

3. Ventil nach Anspruch 1, **dadurch gekennzeichnet, dass** die Regelkontur von einer Außenform eines kreissegmentähnlichen, vollflächig ausgebildeten Ventilkörpers (20) gebildet ist.

4. Ventil nach einem der Ansprüche 1, 2 oder 3, **dadurch gekennzeichnet, dass** die Regelkontur als Kulisse (18) an einer Mantelfläche (19) des Ventilkörpers (15) ausgebildet ist.

5. Ventil nach mindestens einem der vorhergehenden Ansprüche, **dadurch gekennzeichnet, dass** der Ventilkörper (15, 20) schwenkbar gegen die Achse ausgebildet ist.

6. Ventil nach mindestens einem der vorhergehenden Ansprüche, **dadurch gekennzeichnet, dass** der Ventilkörper (15, 20) aus Metall oder aus einem kühlmittelbeständigen Kunststoff besteht, wobei der Kunststoff vorzugsweise Glasfasern und/oder gleitoptimierende Zusätze enthält.

7. Ventil nach mindestens einem der vorhergehenden Ansprüche, **dadurch gekennzeichnet, dass** der auf der Welle (16) angeordnete Ventilkörper (15, 20) gemeinsam mit der Welle (16) oder nur der Ventilkörper (15, 20) mittels mindestens eines federnden Elementes unter Vorspannung zu einer Öffnung mindestens eines Anschlussstutzens (12, 13, 14) steht.

8. Ventil nach mindestens einem der vorhergehenden Ansprüche, **dadurch gekennzeichnet, dass** in dem Gehäuse (11) ein Dehnstoff-Thermostat (21) als Ausfallsicherung des Ventils (2) angeordnet ist.

9. Ventil nach mindestens einem der vorhergehenden Ansprüche, **dadurch gekennzeichnet, dass** das Gehäuse Anschlüsse für Schläuche eines separaten Dehnstoff-Thermostats (21) aufweist.

10. Ventil nach mindestens einem der vorhergehenden Ansprüche, **dadurch gekennzeichnet, dass** eine Gehäuseaußenwand eines Aktuators, durch den das Ventil (2) elektrisch antreibbar ist, zugleich eine Wand des Gehäuses (11) des Ventils (2) bildet.

11. Ventil nach mindestens einem der vorhergehenden Ansprüche, **dadurch gekennzeichnet, dass** eine Positionsrückmeldung des Ventilkörpers (15, 20) über einen Hall-Sensor oder einen Hall-Schalter erfolgt.

12. Ventil nach Anspruch 11, **dadurch gekennzeichnet, dass** die Referenzpunkte des Hall-Schalters über einen oder mehrere mechanisch ausgebildete Endpositionen oder über Magnete ausgebildet sind.

## Claims

1. An electrically drivable valve for controlling volumetric flows in a heating and/or cooling system of a motor vehicle, comprising a housing (11), from which at least two channels, preferably an inlet channel and an outlet channel, branch off, wherein a disc-shaped valve body (15, 20), rotatable about an axis of a drive shaft (16) and having one single control contour (17), is disposed in the housing (11), wherein the control contour (17, 18) of the valve body (15, 20) controls a bypass circuit and a radiator circuit of the heating and/or cooling system, **characterised in that** the valve body (15, 20) on its surface is provided with a seal for sealing against the housing (11) or that a seal is disposed in the housing (11) for sealing the valve body (15, 20) against the housing.

2. The valve according to claim 1, **characterised in that** the valve body (15) is shaped like a full circle and that the control contour is formed as an opening (17) of the valve body (15) shaped like a full circle.

3. The valve according to claim 1, **characterised in that** the control contour is formed by an outer shape of a circle-segment-like, full-surface valve body (20).

4. The valve according to one of claims 1, 2, or 3, **characterised in that** the control contour is formed as a baffle (18) on a lateral surface (19) of the valve body (15).

5. The valve according to at least one of the preceding claims, **characterised in that** the valve body (15, 20) is formed pivotable relative to the axis.

6. The valve according to at least one of the preceding claims, **characterised in that** the valve body (15, 20) consists of metal or of a coolant-resistant plastic, wherein the plastic preferably contains glass fibres and/or additives that optimise sliding.

7. The valve according to at least one of the preceding claims, **characterised in that** the valve body (15, 20), disposed on the shaft (16), together with the shaft (16) or only the valve body (15, 20), is under a preload by means of at least one resilient element relative to an opening of at least one connecting piece (12, 13, 14).

8. The valve according to at least one of the preceding claims, **characterised in that** an expanding wax thermostat (21) is disposed in the housing (11) as failure protection for the valve (2).

9. The valve according to at least one of the preceding claims, **characterised in that** the housing has connections for tubes of a separate expanding wax thermostat (21).

10. The valve according to at least one of the preceding claims, **characterised in that** an outer housing wall of an actuator, by which the valve (2) is electrically drivable, at the same time forms a wall of the housing (11) of the valve (2).

11. The valve according to at least one of the preceding claims, **characterised in that** a position feedback of the valve body (15, 20) occurs via a Hall sensor or a Hall switch.

12. The valve according to claim 11, **characterised in that** the reference points of the Hall switch are formed via one or more mechanically formed end positions or via magnets.

## Revendications

1. Soupape pouvant être commandée électriquement et servant à la régulation de flux volumiques dans un système de chauffage et / ou de refroidissement d'un véhicule automobile, ladite soupape comprenant une cage (11) à partir de laquelle partent au moins deux conduits, de préférence un conduit d'entrée et un conduit de sortie, où un corps de soupape (15, 20) en forme de disque est disposé dans la cage (11), en pouvant tourner autour d'un axe d'un arbre d'entraînement (16) et présentant un unique contour de régulation (17), où le contour de régulation (17, 18) du corps de soupape (15, 20) régule un circuit de dérivation et un circuit de refroidisseur du système de chauffage et / ou de refroidissement, **caractérisée en ce que** le corps de soupape (15, 20) est doté, sur sa surface, d'un joint d'étanchéité servant à assurer l'étanchéité par rapport à la cage (11), ou bien **en ce qu'**un joint d'étanchéité servant à assurer l'étanchéité du corps de soupape (15, 20) par rapport à la cage est disposé dans la cage (11).

2. Soupape selon la revendication 1, **caractérisée en ce que** le corps de soupape (15) est configuré comme un corps formant un cercle entier, et **en ce que** le contour de régulation est configuré comme une ouverture (17) du corps de soupape (15) formant un cercle entier.

3. Soupape selon la revendication 1, **caractérisée en ce que** le contour de régulation est constitué par une forme extérieure d'un corps de soupape (20) configuré, sur toute sa surface, de manière semblable à un segment de cercle.

4. Soupape selon l'une quelconque des revendications 1, 2 ou 3, **caractérisée en ce que** le contour de régulation est configuré comme une coulisse (18) sur une surface d'enveloppe (19) du corps de soupape (15).

5. Soupape selon au moins l'une quelconque des revendications précédentes, **caractérisée en ce que** le corps de soupape (15, 20) est configuré en pouvant pivoter autour de l'axe.

6. Soupape selon au moins l'une quelconque des revendications précédentes, **caractérisée en ce que** le corps de soupape (15, 20) est en métal ou bien se compose d'une matière plastique résistant au moyen de refroidissement, où la matière plastique contient de préférence des fibres de verre et / ou des produits ajoutés optimisant le glissement.

7. Soupape selon au moins l'une quelconque des revendications précédentes, **caractérisée en ce que** le corps de soupape (15, 20) disposé sur l'arbre (16) est, de façon conjointe avec l'arbre (16), ou bien seulement le corps de soupape (15, 20), soumis à une précontrainte vers une ouverture au moins d'une tubulure de raccordement (12, 13, 14), ladite précontrainte s'exerçant au moyen au moins d'un élément élastique.

8. Soupape selon au moins l'une quelconque des revendications précédentes, **caractérisée en ce qu'**un thermostat (21) en matière extensible est disposé, dans la cage (11), comme une sécurité antidéfaillance de la soupape (2).

9. Soupape selon au moins l'une quelconque des revendications précédentes, **caractérisée en ce que** la cage présente des raccords pour des flexibles d'un thermostat séparé (21) en matière extensible.

10. Soupape selon au moins l'une quelconque des revendications précédentes, **caractérisée en ce qu'**une paroi extérieure de boîtier d'un actionneur, par lequel la soupape (2) peut être commandée électriquement, forme en même temps une paroi de la cage (11) de la soupape (2).

11. Soupape selon au moins l'une quelconque des revendications précédentes, **caractérisée en ce qu'**un rappel de position du corps de soupape (15, 20) se produit en étant déclenché par un capteur à effet Hall ou par un commutateur à effet Hall.

12. Soupape selon la revendication 11, **caractérisée en ce que** les points de référence du commutateur à effet Hall sont formés par une ou plusieurs positions de fin de course configurées mécaniquement, ou bien formés par des aimants.
